# EUROPÄISCHE PATENTSCHRIFT

(11) **EP 1 746 312 B1**
(45) Veröffentlichungstag und Bekanntmachung des Hinweises auf die Patenterteilung: **30.09.2009**
(21) Anmeldenummer: 06012471.6
(22) Anmeldetag: 17.06.2006
(51) Int. Cl.: F16H 63/32

(54) **Betätigungsvorrichtung für eine Schaltmuffe**
Actuating device for an selector sleeve
Dispositif d'actionnement pour un manchon de commande

(30) Priorität: 22.07.2005 DE 102005034319
(43) Veröffentlichungstag der Anmeldung: 24.01.2007
(73) Patentinhaber: Schaeffler KG, 91074 Herzogenaurach (DE)
(72) Erfinder: Hauck, Susanne, 91074 Herzogenaurach (DE); Krämer, Klaus, 91460 Baudenbach (DE)

(56) Entgegenhaltungen:
- EP-A- 1 072 826
- DE-A1- 10 317 028
- DE-A1- 10 325 366

## Beschreibung

### Gebiet der Erfindung

Die Erfindung betrifft eine Betätigungsvorrichtung für eine Schaltmuffe in einem Zahnräderwechselgetriebe, die U-förmig ausgebildet ist und zwei Schaltmaulwangen aufweist, die über einen Steg miteinander verbunden sind, wobei die Betätigungsvorrichtung weiterhin ein Mitnehmerelement aufweist, das von einem nebengeordneten Bauteil zur Verschwenkung der Betätigungsvorrichtung um eine Drehachse bewegt werden kann.

### Hintergrund der Erfindung

Zur Betätigung von Schalteinrichtungen in Zahnräderwechselgetrieben, insbesondere in Kraftfahrzeugen, sind Betätigungsvorrichtungen der eingangs genannten Art erforderlich, die als Schaltschwingen ausgebildet sein können. Aus der DE 199 19 271 A1 ist eine derartige Betätigungsvorrichtung bekannt, die aus einem gebogenen Blechteil besteht, das eine U-förmige Kontur aufweist.

Seitlich sind Schaltmaulwangen angeordnet, die über einen verbindenden Steg miteinander verbunden sind. Die vorbekannte Vorrichtung ist dabei spanlos hergestellt und einteilig ausgebildet, wobei in einem Seitenbereich der Vorrichtung zwei Abschnitte des Blechs so umgefalzt sind, dass eine nutförmige Vertiefung ausgebildet wird, in die ein Betätigungsorgan eingreifen kann, um die Vorrichtung zu verschwenken.

Bei anderen Lösungen ist vorgesehen, dass die Betätigungsvorrichtung aus mehreren Blechteilen bzw. Verbundteilen hergestellt wird. Die DE 199 19 270 A1 zeigt eine Betätigungsvorrichtung der eingangs genannten Art, bei der mehrere Blechteils zur Vorrichtung zusammengesetzt sind. Auch in der DE 100 18 850 A1 ist eine Lösung beschrieben, bei der eine Schaltgabel aus mehreren Blechteilen zusammengesetzt wird.

Die DE 100 32 163 A1 offenbart eine Betätigungsvorrichtung für ein Zahnräderwechselgetriebe, bei der diese als Verbundbauteil ausgebildet ist, wobei ein spritzfähiges oder gießfähiges Material zum Einsatz kommt, aus dem ein Führungsrohr gebildet, wobei dieses mit der metallischen Schaltgabel verbunden wird.

Die gattungsgemäße EP 1 072 826 A1 offenbart eine Betätigungsvorrichtung, die mittels einer Schelle auf einer Schaltstange fixiert ist. In DE 103 25 366 A1 wird vorgeschlagen, eine Schaltgabel mittels eines Stifts an einer Schaltstange zu befestigen. DE 103 17 028 A1 beschreibt eine Schaltgabel, die einteilig mit einer Schaltstange ausgebildet ist.

Bei den vorbekannten Lösungen, ist die Herstellung der Betätigungsvorrichtung teilweise sehr aufwändig und damit teuer. Ferner sind die vorbekannten Vorrichtungen teilweise nicht so kompakt ausgebildet, wie es wünschenswert wäre. Auch hinsichtlich der Steifigkeit der Vorrichtung bestehen Einschränkungen, insbesondere, wenn mehrere Teile zur Betätigungsvorrichtungen zusammengefügt werden müssen.

### Aufgabe der Erfindung

Der vorliegenden Erfindung liegt daher die Aufgabe zugrunde, eine Betätigungsvorrichtung für eine Schaltmuffe in einem Zahnräderwechselgetriebe der eingangs genannten Art so weiterzubilden, dass die vorstehenden Nachteile vermieden werden. Die Vorrichtung soll also einfach und damit kostengünstig herstellbar sein und darüber hinaus eine hohe Steifigkeit aufweisen. Ferner soll sie möglichst kompakt ausgebildet sein.

### Zusammenfassung der Erfindung

Die Lösung dieser Aufgabe durch die Erfindung ist dadurch gekennzeichnet, dass das Mitnehmerelement der Betätigungsvorrichtung durch einen Umformprozess aus dem Material des Stegs oder der Schaltmaulwangen ausgebildet ist. Bevorzugt ist das Mitnehmerelement aus dem Material des Stegs ausgebildet.

Hierbei ist insbesondere vorgesehen, dass das Mitnehmerelement aus einem teilweise ausgestanzten oder freigestanzten Abschnitt gebildet wird, der aus der Ebene des Stegs oder der Schaltmaulwangen herausgebogen ist. Besonders bevorzugt ist das Mitnehmerelement aus der Ebene des Stegs oder der Schaltmaulwangen senkrecht herausgebogen.

Um eine bessere Angriffsfläche für das Betätigungsorgan zu haben, kann vorgesehen werden, dass das Mitnehmerelement in seinem vom Steg oder von den Schaltmaulwangen entfernten Endbereich verdickt ausgebildet ist.

Um eine optimale Krafteinleitung bei der Betätigung der Vorrichtung zu gewährleisten, kann die Betätigungsvorrichtung samt Mitnehmerelement im wesentlichen symmetrisch zu einer Symmetrieebene ausgebildet sein. Weiterhin kann das Mitnehmerelement mittig zwischen den beiden Schaltmaulwangen auf dem Steg angeordnet sein.

Fertigungstechnische Vorteile ergeben sich, wenn die Betätigungsvorrichtung spanlos gefertigt ist. Dabei ist insbesondere daran gedacht, dass die Vorrichtung ausschließlich durch Stanz- und Biegeoperationen hergestellt ist.

Die Betätigungsvorrichtung kann einteilig ausgebildet sein und aus Stahlblech bestehen. In letzterem Falle kann das Betätigungselement zumindest teilweise randschichtgehärtet sein, um eine hohe Widerstandskraft gegen Verschleiß zu erreichen.

Es kann auch vorgesehen werden, dass ein größerer Teil der Vorrichtung bzw. sogar die gesamte Vorrichtung gehärtet und/oder vergütet wird, falls sich dies aus Gründen der Bauteilfestigkeit anbietet. Hierdurch kann gegebenenfalls die Blechdicke, also die Materialstärke, verringert werden, was eine leichtere Bauweise ermöglicht.

Mit der vorgeschlagenen Ausgestaltung wird eine kompakte Schaltschwinge geschaffen, die einfach und preisgünstig hergestellt werden kann. Sie weist hohe Steifigkeitswerte auf und gewährleistet bei entsprechender Anordnung des Mitnehmerelements eine günstige symmetrische Kraftverteilung.

Die Betätigungsvorrichtung kann sowohl bei automatisierten als auch bei handgeschalteten Getrieben eingesetzt werden.

### Kurze Beschreibung der Figuren

In den Zeichnungen ist ein Ausführungsbeispiel der Erfindung dargestellt. Es zeigen:
- Fig. 1: in perspektivischer Ansicht eine Betätigungsvorrichtung für eine Schaltmuffe in einem Zahnräderwechselgetriebe,
- Fig. 2: die Draufsicht auf die Betätigungsvorrichtung gemäß Fig. 1,
- Fig. 3: die Vorderansicht der Betätigungsvorrichtung gemäß Fig. 1 und
- Fig. 4: den Schnitt A-A gemäß Fig. 3 durch die Betätigungsvorrichtung.

### Ausführliche Beschreibung der Figuren

Die in den Figuren dargestellte Betätigungsvorrichtung 1 dient zur axialen Verschiebung einer nicht dargestellten Schaltmuffe in einem Zahnräderwechselgetriebe. Sie hat eine U-förmige Grundgestalt, die aus einem Blechteil gebildet wird, das zwei seitlich angeordnete Schaltmaulwangen 2 und 3 hat, die über einen flächig ausgebildeten Steg 4 miteinander verbunden sind.

Lageübereinstimmend ist in jede Schaltmaulwange 2 und 3 vom Steg 4 ausgehend zunächst eine Aufnahmebohrung 9 bzw. 10 eingebracht, die in Verbindung mit einem nicht dargestellten ortsfest angeordneten Zapfen ein Schwenkgelenk für die Betätigungsvorrichtung 1 bilden, so dass diese um die Drehachse 6 geschwenkt werden kann. In Richtung der freien Enden der Schaltmaulwangen 2, 3 sind diese weiterhin jeweils mit einer Lagerbuchse 11 bzw. 12 versehen, die eine gelenkige Anbindung der nicht gezeigten Schaltmuffe ermöglichen.

Die Verschwenkung der Betätigungsvorrichtung 1 erfolgt durch ein nicht dargestelltes Betätigungsorgan (also durch ein nebengeordnetes Bauteil), das ein senkrecht aus der Ebene 7 des Steges 4 nach oben heraustretendes Mitnehmerelement 5 greift und bewegt.

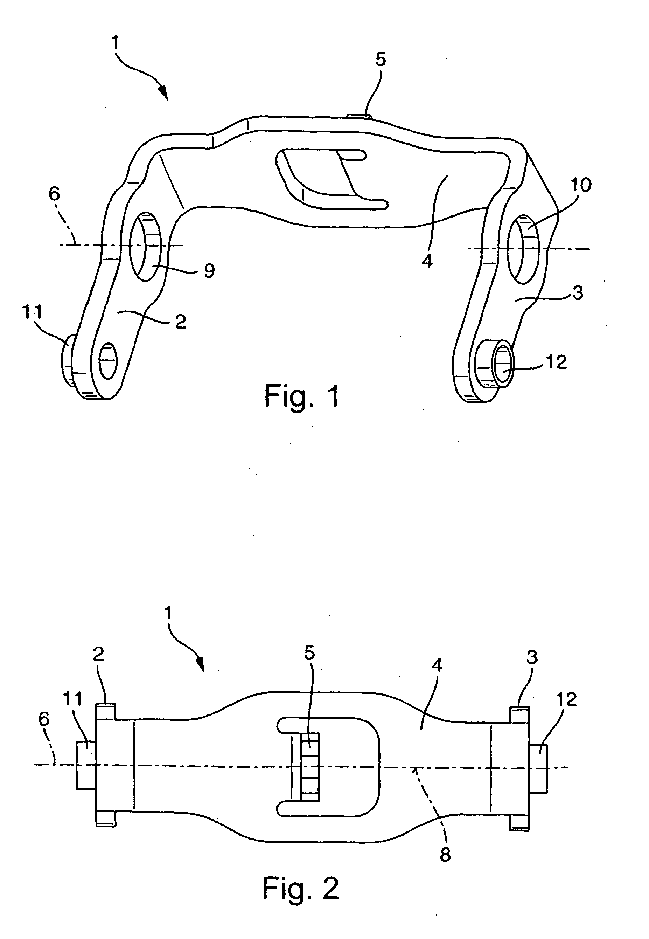

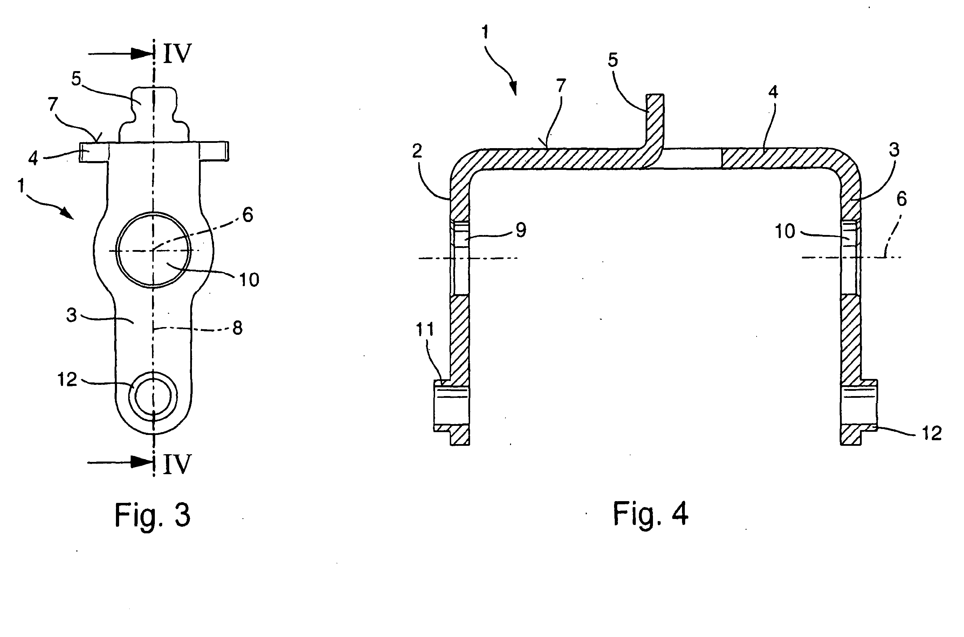

Das Mitnehmerelement 5 ist aus dem flächigen, ebenen Blechmaterial des Bauteils und insbesondere des Steges 4 gebildet. Hierzu ist eine Einstanzung in das Stegmaterial vorgenommen worden, s. am besten in Fig. 2 und 4, so dass ein zungenförmiger Blechstreifen entstanden ist, der einseitig am Stegmaterial hängt. Dieser Blechstreifen ist aus der Ebene 7 des Steges senkrecht nach oben gebogen worden, so dass er mit dem Betätigungsorgan zusammenwirken und so die Betätigungsvorrichtung bewegen kann.

Die gesamte Vorrichtung 1 ist aus einem gestanzten und umgebogenen Blechteil konstanter Dicke gebildet ― sieht man einmal von den Lagerbuchsen 11 und 12 ab.

Um ein verbessertes Zusammenwirken mit dem nicht gezeigten Betätigungsorgan zu erreichen, ist ― wie es in Fig. 3 gesehen werden kann ― der vom Grundkörper abgewandte Bereich des Mitnehmerelements 5 verdickt ausgebildet, was durch den Freistanz- bzw. Ausstanzprozess leicht bewerkstelligt werden kann.

Weiterhin ist das Mitnehmerelement 5 einmal mittig zwischen den beiden Schaltmaulwangen 2, 3 angeordnet und einmal symmetrisch zur Symmetrieebene 8 (s. Fig. 2 und 3) des Bauteils 1 positioniert. Hierdurch wird eine optimale Krafteinleitung in die Vorrichtung 1 sichergestellt.

Das zum Einsatz kommende Material für die Vorrichtung ist Stahlblech, das bedarfsweise gehärtet und vergütet werden kann. Insbesondere kann eine Randschichthärtung des Betätigungselements 5 vorgesehen werden.

### Bezugszeichenliste

- 1: Betätigungsvorrichtung
- 2: Schaltmaulwange
- 3: Schaltmaulwange
- 4: Steg
- 5: Mitnehmerelement
- 6: Drehachse
- 7: Ebene des Stegs
- 8: Symmetrieebene
- 9: Aufnahmebohrung
- 10: Aufnahmebohrung
- 11: Lagerbuchse
- 12: Lagerbuchse

## Patentansprüche

1. Betätigungsvorrichtung (1) für eine Schaltmuffe in einem Zahnräderwechselgetriebe, die U-förmig ausgebildet ist und zwei Schaltmaulwangen (2, 3) aufweist, die über einen Steg (4) miteinander verbunden sind, wobei die Betätigungsvorrichtung (1) weiterhin ein Mitnehmerelement (5) aufweist, das von einem nebengeordneten Bauteil zur Verschwenkung der Betätigungsvorrichtung (1) um eine Drehachse (6) bewegt werden kann,
**dadurch gekennzeichnet,**
**dass** das Mitnehmerelement (5) durch einen Umformprozess aus dem Material des Stegs (4) oder der Schaltmaulwangen (2, 3) ausgebildet ist und dass das Mitnehmerelement (5) aus einem teilweise ausgestanzten oder freigestanzten Abschnitt gebildet wird, der aus der Ebene (7) des Stegs (4) oder der Schaltmaulwangen (2, 3) herausgebogen ist.

2. Betätigungsvorrichtung nach Anspruch 1, **dadurch gekennzeichnet, dass** das Mitnehmerelement (5) aus dem Material des Stegs (4) ausgebildet ist.

3. Betätigungsvorrichtung nach Anspruch 1, **dadurch gekennzeichnet, dass** das Mitnehmerelement (5) aus der Ebene (7) des Stegs (4) oder der Schaltmaulwangen (2, 3) senkrecht herausgebogen ist.

4. Betätigungsvorrichtung nach Anspruch 1, **dadurch gekennzeichnet, dass** das Mitnehmerelement (5) in seinem vom Steg (4) oder von den Schaltmaulwangen (2, 3) entfernten Endbereich verdickt ausgebildet ist.

5. Betätigungsvorrichtung nach Anspruch 1, **dadurch gekennzeichnet, dass** die Betätigungsvorrichtung samt Mitnehmerelement (5) im wesentlichen symmetrisch zu einer Symmetrieebene (8) ausgebildet ist.

6. Betätigungsvorrichtung nach Anspruch 2, **dadurch gekennzeichnet, dass** das Mitnehmerelement (5) mittig zwischen den Schaltmaulwangen (2, 3) auf dem Steg (4) angeordnet ist.

7. Betätigungsvorrichtung nach Anspruch 1, **dadurch gekennzeichnet, dass** sie spanlos gefertigt ist.

8. Betätigungsvorrichtung nach Anspruch 6, **dadurch gekennzeichnet, dass** sie ausschließlich durch Stanz- und Biegeoperationen hergestellt ist.

9. Betätigungsvorrichtung nach Anspruch 1, **dadurch gekennzeichnet, dass** sie samt Mitnehmerelement (5) einteilig ausgebildet ist.

10. Betätigungsvorrichtung nach Anspruch 1, **dadurch gekennzeichnet, dass** sie aus Stahlblech besteht.

11. Betätigungsvorrichtung nach Anspruch 9, **dadurch gekennzeichnet, dass** das Mitnehmerelement (5) zumindest teilweise randschichtgehärtet ist.

## Claims

1. Actuating device (1) for a gearshift sleeve in a variable speed gear transmission, said actuating device having a U-shaped configuration and comprising two gearshift jaw side walls (2, 3) that are connected to each other by a crossbar (4), said actuating device (1) further comprising an entraining element (5) that can be displaced by a secondary component for pivoting the actuating device (1) about a pivot axis (6),
**characterised in that**
the entraining element (5) is made by a shaping procedure out of the material of the crossbar (4) or of the gearshift jaw side walls (2, 3) and that the entraining element (5) is constituted by a partially punched out or punched free section that is bent out from the plane (7) of the crossbar (4) or of the gearshift jaw side walls (2, 3).

2. Actuating device according to claim 1, **characterised in that** the entraining element (5) is configured out of the material of the crossbar (4).

3. Actuating device according to claim 1, **characterised in that**

4. Actuating device according to claim 1, **characterised in that** the entraining element (5) is bent at a right angle out of the plane (7) of the crossbar (4) or of the gearshift jaw side walls (2, 3).

5. Actuating device according to claim 1, **characterised in that** the entraining element (5) has a thickened configuration in its end region distant from the crossbar (4) or from the gearshift jaw side walls (2, 3).

6. Actuating device according to claim 1, **characterised in that** the actuating device together with the entraining element (5) is configured substantially symmetrical about a plane of symmetry (8).

7. Actuating device according to claim 2, **characterised in that** the entraining element (5) is arranged centrally on the crossbar (4) between the gearshift jaw side walls (2, 3).

8. Actuating device according to claim 1, **characterised in that** the actuating device is made without chip removal.

9. Actuating device according to claim 7 **characterised in that** the actuating device is made exclusively by punching and bending operations.

10. Actuating device according to claim 1, **characterised in that** the actuating device is made in one piece with the entraining element (5).

11. Actuating device according to claim 1, **characterised in that** the actuating device is made of sheet steel.

12. Actuating device according to claim 10, **characterised in that** the entraining element (5) is at least partially surface layer-hardened.

## Revendications

1. Dispositif d'actionnement (1) pour un manchon de changement de vitesse dans une transmission par engrenages, ledit dispositif d'actionnement ayant une configuration en forme de U et comprenant deux parois latérales (2, 3) de mâchoire de changement de vitesse, lesquelles sont reliées, l'une à l'autre, par une traverse (4), ledit dispositif d'actionnement (1) comprenant, en plus, un élément d'entraînement (5) qui peut être déplacé par un composant secondaire pour permettre un pivotement du dispositif d'actionnement (1) autour un axe de pivotement (6),
**caractérisé en ce que**
l'élément d'entraînement (5) est configuré par un procédé de formage à partir du matériau de la traverse (4) ou du matériau des parois latérales (2, 3) de mâchoire de changement de vitesse, et **en ce que** l'élément d'entraînement (5) est constitué d'une section partiellement découpée ou libérée par découpage et repliée hors du plan (7) de la traverse (4) ou des parois latérales (2, 3) de mâchoire de changement de vitesse.

2. Dispositif d'actionnement selon revendication 1, **caractérisé en ce que** l'élément d'entraînement (5) est configuré en le matériau de la traverse (4).

3. Dispositif d'actionnement selon revendication 1, **caractérisé en ce que**

4. Dispositif d'actionnement selon revendication 1, **caractérisé en ce que** l'élément d'entraînement (5) est replié à angle droit hors du plan (7) de la traverse (4) ou des parois latérales (2, 3) de mâchoire de changement de vitesse.

5. Dispositif d'actionnement selon revendication 1, **caractérisé en ce que,** dans sa région d'extrémité éloignée de la traverse (4) ou des parois latérales (2, 3) de mâchoire de changement de vitesse, l'élément d'entraînement (5) a une configuration épaissie.

6. Dispositif d'actionnement selon revendication 1, **caractérisé en ce que** le dispositif d'actionnement et l'élément d'entraînement (5) ont, tous ensemble, une configuration sensiblement symétrique par rapport à un axe de symétrie (8).

7. Dispositif d'actionnement selon revendication 2, **caractérisé en ce que** l'élément d'entraînement (5) est agencé dans une position centrale sur la traverse (4) entre les parois latérales (2, 3) de mâchoire de changement de vitesse.

8. Dispositif d'actionnement selon revendication 1, **caractérisé en ce que,** il est fabriqué sans enlèvement de copeaux.

9. Dispositif d'actionnement selon revendication 7, **caractérisé en ce que,** il est fabriqué exclusivement par des opérations de découpage et de flexion.

10. Dispositif d'actionnement selon revendication 1, **caractérisé en ce que** le dispositif d'actionnement et l'élément d'entraînement (5) sont fabriqués d'un seul tenant, l'un avec l'autre.

11. Dispositif d'actionnement selon revendication 1, **caractérisé en ce que,** il est fait en tôle d'acier.

12. Dispositif d'actionnement selon revendication 10, **caractérisé en ce que** l'élément d'entraînement (5) est durci, au moins partiellement, dans des zones superficielles.
